# EUROPEAN PATENT SPECIFICATION

(11) **EP 2 770 358 B1**
(45) Date of publication and mention of the grant of the patent: **08.04.2020**
(21) Application number: 14156070.6
(22) Date of filing: 21.02.2014
(51) Int. Cl.: G02B 6/44

(54) **Water-block element for fiber-optic blown tube**
Wasserblockelement für faseroptisches geblasenes Rohr
Élément imperméable à l'eau pour tube soufflé à fibres optiques

(30) Priority: 22.02.2013 IT MI20130255
(43) Date of publication of application: 27.08.2014
(73) Proprietor: Prysmian S.p.A., 20126 Milano (IT)
(72) Inventor: Kerry, Matt, I-20126 Milano (IT); Millard, Steve, I-20126 Milano (IT); Griffiths, Ian, I-20126 Milano (IT)
(74) Representative: Maccalli, Marco

(56) References cited:
- EP-A1- 0 363 188
- WO-A1-2008/056091
- DE-U1-202005 013 818
- GB-A- 2 425 365

## Description

### Background of the invention

### Field of the invention

The present invention relates to a water-block element usable in fiber-optic communication networks and particularly to a water-block element for fiber-optic blown tube housing blown fiber units.

### Overview of the related art

The deployment of fiber-optic communication networks is an ongoing process, to cope with the rapid growth of so-called broadband services (e.g., telephone, data and/or video service) provided by several operators.

Fiber-optic networks are progressively being brought closer and closer to the users' premises, a process also known as "FTTx" ("Fiber To The x"), which means using optical fibers to replace all or part of the usual metal local loop used for last-mile telecommunications.

An efficient technique for the installation of fiber-optic cables is by blowing, typically by an air jet.

A fiber-optic cable designed for blown installation (blown cable) may contain up to twenty-four tubes (blown tubes), each one housing a blown optical fiber unit (blown fiber unit). A blown fiber unit is an assembly that can contain two, four, six, eight or twelve optical fibers, and comprises a soft inner acrylate layer which cushions the optical fibers, an outer harder layer which protects the fibers from damage, and a low-friction layer that assists in improving the blowing distance, which is typically in excess of 1000 meters. Typically, an optical fiber comprises a glass core, a glass cladding and a single or dual coating layer surrounding the optical fiber.

A blown-type fiber-optic communication network typically comprises a plurality of pre-installed blown cables, linked together in nodes. The nodes may be cabinets (optical joint cabinets) installed for example in the basement of a building. In the installation, blown fiber units are blown through the blown tubes of the blown cable, up to a node, where the blown fiber units are then extracted from the respective blown tubes for being routed into other blown tubes, or for splicing the optical fibers to corresponding optical fibers of other optical cables, blown fiber units or the like, reaching the users' premises. Splicing of the optical fibers is conveniently made in splice trays provided in the optical joint cabinets.

A water-resistant sealing needs to be provided between the extracted blown fiber units and the respective blown tube, for preventing water, that may penetrate the blown tubes somewhere in the external cable network and travel through the blown tubes to the splice tray, from exiting the blown tube and penetrating into the optical joint cabinet and the fiber splice region, and vice-versa. Such a sealing is achieved by using water-block elements.

A known water-block element that is suitable for this use is sold by John Guest International Limited under Part No. NC2674. The water-block element comprises a rigid plastic main body bored longitudinally, with a first end which is inserted in a blown tube and a second end for the exit of a blown fiber unit.

The second end comprises a sleeve for receiving a bored rubber member. The sleeve, in turn, is fitted in a terminal bored portion which is longitudinally movable between a rest position, where the rubber member is normally fitted inside the terminal bored portion, and a second position, where the rubber member is squeezed by the terminal bored portion. In this second position, the blown fiber unit fitted in the rubber member is completely wrapped around and blocked by the rubber member, so that a watertight effect between the blown tube and the blown fiber unit is created. GB-A-2425365 discloses a seal for a cable assembly.

### Summary of the invention

The Applicant has observed that the known water-block elements have a complex, multi-pieces construction, made of both hard plastic materials and rubber components, and thus they result to be expensive and require accuracy for their installation, with the result that the installation procedure is lengthy. Considering that one water block element needs to be installed in each splice tray of an optical joint cabinet, and that several splice trays (e.g., up to thirty-two) can be present in one optical joint cabinet, the required number of water block elements is very high, and the problems of cost and installation time become significant.

The Applicant has thus tackled the problem of devising a more effective solution for the watertight sealing between blown tubes and blown fiber units.

According to an aspect of the present invention, there is provided a water-block element for water-tight sealing a blown tube containing a blown fiber unit at an extraction point of the blown fiber unit from the blown tube.

The water-block element comprises a monolithic body of an elastically deformable material having a bore along a longitudinal direction. Said bore has a first opening at a first free end of the monolithic body and a second opening at a second free end of the monolithic body, the first opening being an entrance for the blown tube and the second opening being an exit for the blown fiber unit extracted from the blown tube.

Said bore comprises a first bore and a second bore aligned along said direction, the first bore having a first diameter suitable for receiving therein with mechanical interference a terminal portion of the blown tube, and said second portion having a second diameter suitable for receiving therein with mechanical interference the extracted blown fiber unit with a first number of optical fibers.

Said second bore comprises at least a first bore portion and a second bore portion aligned along said direction, the first bore portion being closer to the first free end and the second bore portion being closer to the second free end, the first bore portion having a third diameter greater than said second diameter and suitable for receiving therein with mechanical interference an extracted blown fiber unit with a second number of optical fibers greater than said first number of optical fibers.

Preferably, a portion of the monolithic body close to the second free end is formed wherein the second bore portion is provided, wherein said portion of the monolithic body close to the second free end is adapted to be torn-apart from the rest of the monolithic body.

The monolithic body is advantageously made of rubber, for example TPE rubber. Preferably, the first bore is frusto-conical, with diameter reducing along said direction from the first free end towards the second free end.

The second bore is frusto-conical, with diameter reducing along said direction from the first free end towards the second free end.

The water block element according to the present invention allows achieving a substantial cost reduction and installation time saving.

### Brief description of the drawings

These and other features and advantages of the present invention will be made clearer by the following detailed description of embodiments thereof, provided merely by way of non-limitative example. The description will be better intelligible if read in conjunction with the attached drawings, wherein:
**Fig. 1** shows in isometric view a water block element according to an embodiment of the present invention;
**Fig. 2** shows a cross-section of the water block element of **Fig. 1** along an axial plane;
**Fig. 3** depicts the procedure for installing the water block element of **Figs. 1** and **2** on a first blown tube containing a first blown fiber unit having a first number of optical fibers;
**Fig. 4** shows the water block element installed on the first blown tube;
**Fig. 5** is a cross-sectional view along plane **V-V** of **Fig. 4****;**
**Fig. 6** shows a phase of the procedure for installing the water block element of **Figs. 1** and **2** on a second blown tube containing a second blown fiber unit having a second number of optical fibers;
**Fig. 7** shows the water block connector installed on the second blown tube, and
**Fig. 8** is a cross-sectional view along plane **VIII-VIII** of **Fig. 7****.**

### Detailed description of embodiments of the invention

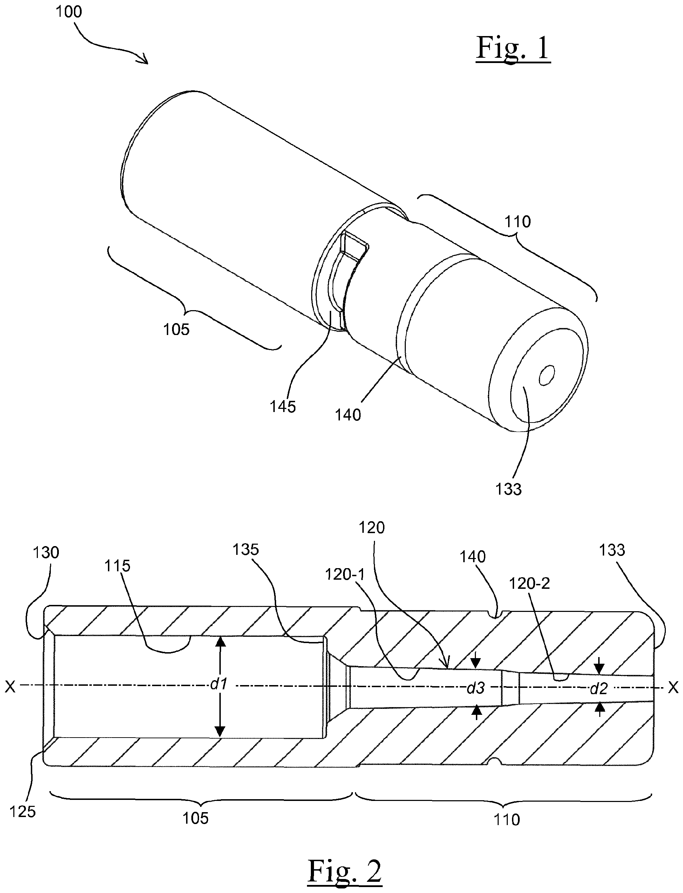

With reference to the drawings, and particularly to **Figs. 1** and **2****,** a water-block element **100** according to an embodiment of the present invention is shown.

The water-block element **100** is a single-piece, i.e. monolithic element, made of an elastically deformable material, preferably rubber, for example injection moulded TPE (Thermoplastic Elastomer) rubber.

The water block element **100** comprises a first portion or main body portion or entrance **105,** and a second portion or exit portion **110.** The first portion **105** has an internal bore (first bore) **115** and the second portion **110** has an internal bore (second bore) **120.** The first and second bores **115** and **120** are axially aligned along a same axis **X-X.**

The first portion has a free end **125,** at which the first bore **115** formed in the first portion **105** opens, preferably with a flared edge **130.** The flared opening at the first end **125** of the first portion is for the insertion of an end portion of a blown tube, as explained in the following. The second portion **110** has a free end **133,** at which the second bore **120** opens. The opening of the second bore **120** is for the exit of a blown fiber unit contained in the blown tube.

The first bore **115** has a diameter ***d1*** slightly smaller than an external diameter of the blown tube, in order to create mechanical interference of the wall of the first bore **115** with the blown tube outer wall when the blown tube is inserted into the first bore **115.** Such mechanical interference ensures that the blown tube is firmly hold within the water block element (by friction), and prevents leakage of water out of the blown tube. For example, for blown tubes having an external diameter of 3 mm with a tolerance of +0.05 mm / -0.01 mm, the diameter ***d1*** of the first bore **115** is 2.85 mm with a tolerance of +0 / - 0.10 mm. The flared edge of the first bore **115** facilitates the insertion of the blown tube.

In one version, the diameter ***d1*** of the first bore **115** is about 5% smaller than the external diameter of the blown tube.

Preferably, the first bore **115** is frusto-conical, decreasing in diameter in going, along the axis **X-X,** from the opening at the first end **125** towards the second portion of the water block element. For example, the diameter of the bore **115** at its end close to the first end **125** can be 5-10% larger than the diameter at its opposite end. This further facilitates the insertion by friction of the blown tube into the first bore **115** and enhances the water-tight sealing.

Advantageously, the first bore **115** terminates, opposite to the first end **125,** with an annular shoulder **135,** against which the end of the blown tube abuts when the latter is fully inserted in the first bore **115.**

In a similar manner, the second bore **120** in the second portion **110** of the water block element **100** has an internal diameter ***d2*** slightly smaller than an outer diameter of the blown fiber unit housed in the blown tube, in order to create mechanical interference of the wall of the second bore **115** with the blown fiber unit outer wall when the blown fiber unit is inserted into the first bore **115.** Such mechanical interference ensures that the blown buffer tube is firmly hold (by friction) within the water block element, and prevents leakage of any water out of the blown tube and out of the water block element, into a fiber splicing region. The degree interference of this second bore **120** with the outer diameter of the blown fiber unit is analogous to the one exemplified above.

The second bore **120** is flared at its opening towards the first bore **115,** for facilitating the insertion of the blown fiber unit.

As mentioned in the introduction of the present description, a blown fiber unit is an assembly that can contain two, four, six, eight or twelve optical fibers. The outer diameter of the blown fiber unit depends on the number of optical fibers contained therein.

Thus, one option is realizing water block elements **100** with second bores **120** of different diameters ***d2*,** each one corresponding to a specific number of optical fibers contained in the blown tube.

An advantageous option is realizing water block elements **100** adapted to be used in combination with blown tubes housing blown fiber units containing different numbers of optical fibers. One example of this option is depicted in **Figs. 1** and **2****.**

The water block element **100** of the shown example has a second portion **110** in which two axially consecutive bore portions **120-1** and **120-2** of different diameters are formed: a first bore portion **120-1** with a diameter ***d3*** corresponding to (slightly smaller than) an outer diameter of a blown fiber unit containing a first number of optical fibers, e.g. twelve, and a second bore portion **120-2** with a diameter ***d2*** corresponding to (slightly smaller than) an outer diameter of a blown fiber unit containing a second number of optical fibers, e.g. four. For example, the diameter ***d3*** of the first bore portion **120-1** is 1.17 mm, with a tolerance of +0 mm/-0.10 mm, for a blown fiber unit of twelve optical fibers, and the diameter ***d2*** of the second bore portion **120-2** is 0.88 mm, with a similar tolerance, for a blown fiber unit of four optical fibers.

Preferably, the second bore **120,** i.e., in the embodiment shown in the drawings, one or both of the consecutive second bore portions **120-1** and **120-2,** are frusto-conical, decreasing in diameter in moving along the axis **X-X** from the opening at the first end **125** towards the second portion of the water block element. This further facilitates the insertion by friction of the blown fiber units. For example, the diameter ***d3*** of the first bore portion **120-1** decreases from 1.17 mm to 1 mm for a blown fiber unit of twelve optical fibers, and the diameter ***d2*** of the second bore portion **120-2** decreases from 0.88 mm to 0.70 mm for a blown fiber unit of four optical fibers.

In one version, the diameter ***d3*** of the first bore portion **120-1** is about 59% ÷ 65% smaller than the diameter ***d1*** of the first bore **115.**

In one further version, the diameter ***d2*** of the second bore portion **120-2** is about 69% ÷ 75% smaller than the diameter ***d1*** of the first bore **115.**

Different degrees of interference and of conicity of the possible frusto-conical portions may be applied for different materials, depending on the relevant elastic module, as required to provide the desired mechanical friction and water tightness.

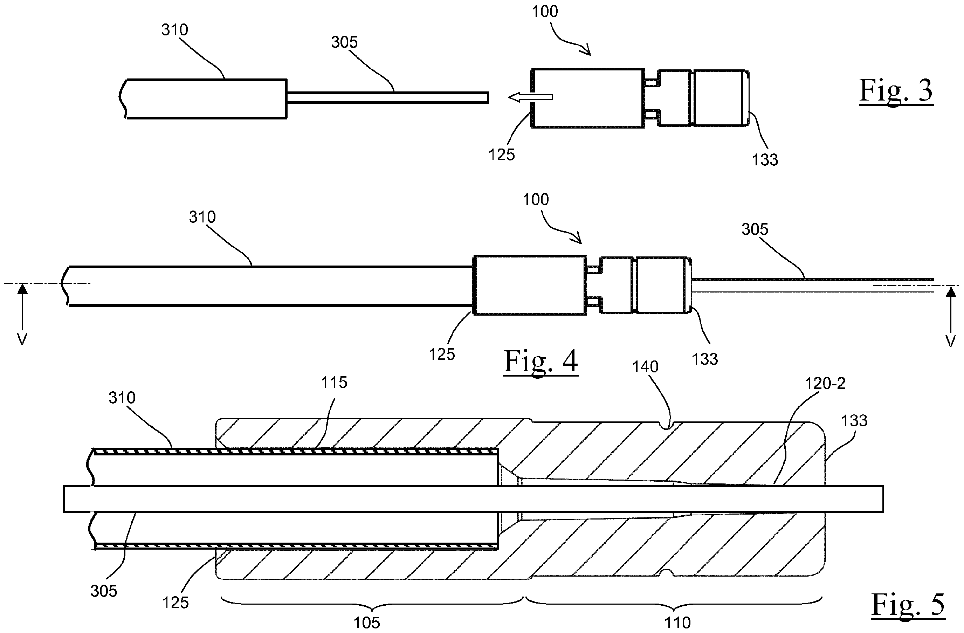

When the water-block element **100** has to be used in combination with a blown tube housing a blown fiber unit with a smaller number of optical fibers, e.g. four, it is used as it is, with the second portion **110** having both the first and the second bore portions. As shown in **Figs. 3 - 5****,** the terminal section of the blown fiber unit **305** exiting from the blown tube **310** is inserted into the bore **115** of the water-block element **100** from the opening in the free end **125** of the first portion **105** thereof. The water block element **100,** by pushing is then slipped over the end portion of the blown tube **310,** preferably until the end of the blown tube **310** abuts against the annular shoulder **135.** At the same time, the blown fiber unit **305** passes through the bore **120** and exits at the free end **133** of the second portion **110** of the water-block element **100.** Being the diameter ***d1*** of the first bore **115** slightly smaller than the outer diameter of the blown tube **310,** mechanical interference between the wall of the first bore **115** and the outer wall of the blown tube **310** ensures a water-tight sealing. The elasticity of the material of the water-block element **100** ensures the slight amount of deformation that allows the insertion of the blown tube into the first bore **105.** Similarly, being diameter ***d2*** of the second bore portion **120-2** slightly smaller than the outer diameter of the blown fiber unit **305,** mechanical interference between the wall of the second bore portion **120-2** and the outer wall of the blown fiber unit **305** ensures a water-tight sealing. The elasticity of the material of the water-block element **100** ensures the slight amount of deformation that allows the insertion of the blown fiber unit into the second bore portion **120-2.**

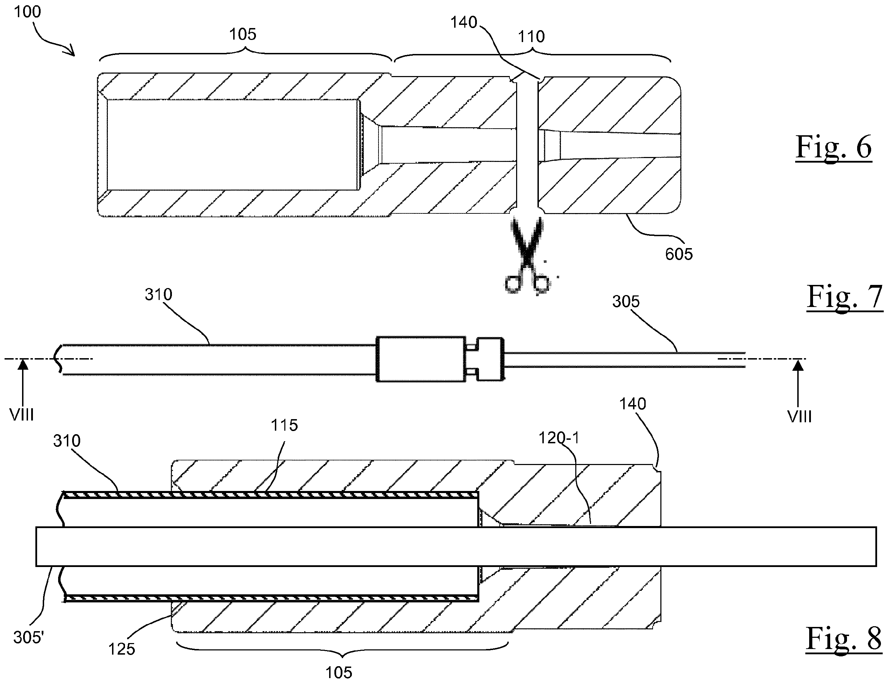

When instead, as depicted in **Figs. 6-8****,** the water block element **110** is to be used in combination with a blown tube **310** housing a blown fiber unit **305'** with a greater number of optical fibers, e.g. twelve, the terminal part **605** of the second portion **110** is preliminarily detached, cut away, e.g. by using scissors or a knife, so as to remove the second bore portion **120-2** leaving just the first bore portion **120-1,** of greater diameter. The same operations described above are then performed.

Advantageously, the water block element **100** has, in the second portion **110** externally thereof, a marker or a weakening **140** at the transition between the first bore portion **120-1** and the second bore portion **120-2.** The marker or weakening **140** facilitates an operation of cutting away the terminal part of the second portion **110** at the right point, by easily spotting it.

Advantageously, the water block element **100** has a seat **145** formed externally of it for the positioning thereof in a splice tray.

While the exemplary water-block element **100** here described is suitable to be used in combination with blown tubes containing blown fiber units of two different optical fibers numbers, nothing prevents from realizing water-block elements suitable to be used in combination with blown tubes containing blown fiber units of more than two optical fibers numbers, e.g. three or more. In such a case, in the second portion **110** of the water-block element **100,** three or more axially consecutive portions of the bore **120** are provided, each having a different bore diameter, corresponding to (slightly smaller than) the diameter of the respective blown fiber unit. In particular, the diameter of the bore portions become smaller moving along the axis **X-X** towards the free end **133.** Depending on the number of optical fibers in the blown fiber unit contained in the buffer tube, one, two or more terminal segments of the second portion **110** of the element **100** have to be cut away.

## Claims

1. Water-block element **(100)** for water-tight sealing a blown tube **(310)** containing a blown fiber unit **(305,305')** at an extraction point of the blown fiber unit from the blown tube, comprising:
- a monolithic body of an elastically deformable material having a bore **(115,120)** along a direction **(X-X);**
- said bore having a first opening at a first free end **(125)** of the monolithic body and a second opening at a second free end **(133)** of the monolithic body, the first opening being an entrance for the blown tube and the second opening being an exit for the blown fiber unit extracted from the blown tube;
- wherein said bore comprises a first bore **(115)** and a second bore **(120)** aligned along said direction, the first bore having a first diameter (***d1***) suitable for receiving therein a terminal portion of the blown tube with mechanical interference, and said second bore having a second diameter (***d2***) suitable for receiving therein the extracted blown fiber unit with mechanical interference, wherein the second bore is frusto-conical, with diameter reducing along said direction **(X-X)** from the first free end **(125)** towards the second free end **(133),**
**characterized in that**:
- said bore **(115,120)** along said direction is a single bore **(115,120),** and
- the second bore **(120)** is flared at its opening towards the first bore **(115).**

2. Water-block element according to claim 1, wherein said second bore **(120)** comprises a first bore portion **(120-1)** and a second bore portion **(120-2)** aligned along said direction **(X-X),** the first bore portion **(120-1)** being closer to the first free end **(125)** and the second bore portion **(120-2)** being closer to the second free end **(133),** the first bore portion **(120-1)** having a third diameter **(*d3*)** greater than said second diameter (***d2***) and suitable for receiving therein with mechanical interference an extracted blown fiber unit **(305;305')** with a second number of optical fibers greater than said first number of optical fibers.

3. Water-block element according to claim 2, wherein a portion of the monolithic body close to the second free end **(133)** is formed wherein the second bore portion **(120-1)** is provided, and wherein said portion of the monolithic body close to the second free end **(133)** is adapted to be torn-apart from the rest of the monolithic body.

4. Water-block element according to any one of the preceding claims from claim 1 to claim 3, wherein the monolithic body is made of rubber.

5. Water-block element according to claim 4, wherein said rubber is TPE rubber.

6. Water-block element according to any one of the preceding claims from claim 1 to claim 5, wherein the first bore **(115)** is frusto-conical, with diameter reducing along said direction **(X-X)** from the first free end towards the second free end.

## Patentansprüche

1. Wasserblockelement (100) zum wasserdichten Verschließen einer Röhre (310), die einen geblasenen Lichtwellenleiter (305, 305 ') enthält, an einer Entnahmestelle der Lichtwellenleitereinheit aus der Röhre, umfassend:
- einen monolithischen Körper aus einem elastisch verformbaren Material mit einer Bohrung (115, 120) entlang einer Richtung (XX);
- wobei die Bohrung eine erste Öffnung an einem ersten freien Ende (125) des monolithischen Körpers und eine zweite Öffnung an einem zweiten freien Ende (133) des monolithischen Körpers aufweist, wobei die erste Öffnung ein Eingang für die Röhre und die zweite Öffnung ein Ausgang für die geblasene Lichtwellenleitereinheit ist, die aus der Röhre entnommen wird;
- wobei die Bohrung eine erste Bohrung (115) und eine zweite Bohrung (120) aufweist, die entlang der Richtung ausgerichtet sind, wobei die erste Bohrung einen ersten Durchmesser (d1) aufweist, der dazu geeignet ist, einen Endabschnitt der Röhre mit mechanischer Interferenz aufzunehmen, und einen zweiten Abschnitt mit einem zweiten Durchmesser (d2), der zum Aufnehmen der extrahierten geblasenen Lichtwellenleitereinheit mit mechanischer Interferenz geeignet ist, wobei die zweite Bohrung (120) kegelstumpfförmig ist, wobei der Durchmesser entlang der Richtung (XX) vom ersten freien Ende (125) zum zweiten freien Ende (133) hin abnimmt, **dadurch**
**gekennzeichnet, dass**:
- die Bohrung (115, 120) entlang der Richtung eine einzelne Bohrung (115, 120) ist und
- die zweite Bohrung (120) an ihrer Öffnung zur ersten Bohrung (115) hin aufgeweitet ist.

2. Wasserblockelement nach Anspruch 1, wobei die zweite Bohrung (120) einen ersten Bohrungsabschnitt (120-1) und einen zweiten Bohrungsabschnitt (120-2) aufweist, die entlang der Richtung (XX) ausgerichtet sind, wobei der erste Bohrungsabschnitt (120-1) näher am ersten freien Ende (125) ist und der zweite Bohrungsabschnitt (120-2) näher am zweiten freien Ende (133) ist, wobei der erste Bohrungsabschnitt (120-1) einen dritten Durchmesser (d3) aufweist, der größer als der zweite Durchmesser ist (d2) und der geeignet ist zum Entgegennehmen einer herausgezogenen geblasenen Glasfasereinheit (305; 305') mit einer zweiten Anzahl von Lichtwellenleitern, die größer als die erste Anzahl von Lichtwellenleitern ist, mit mechanischer Interferenz.

3. Wasserblockelement nach Anspruch 2, wobei ein Abschnitt des monolithischen Körpers nahe dem zweiten freien Ende (133) ausgebildet ist, in dem der zweite Bohrungsabschnitt (120-1) vorgesehen ist, und wobei der Abschnitt des monolithischen Körpers in der Nähe des zweiten freien Endes (133) ausgebildet ist, um vom Rest des monolithischen Körpers getrennt zu werden.

4. Wasserblockelement nach einem der vorhergehenden Ansprüche von Anspruch 1 bis Anspruch 3, wobei der monolithische Körper aus Gummi besteht.

5. Wasserblockelement nach Anspruch 4, wobei das Gummi TPE-Kautschuk ist.

6. Wasserblockelement nach einem der vorhergehenden Ansprüche von Anspruch 1 bis Anspruch 5, wobei die erste Bohrung (115) kegelstumpfförmig ist, wobei der Durchmesser entlang der Richtung (XX) vom ersten freien Ende hin zum zweiten freien Ende abnimmt.

## Revendications

1. Élément de blocage d'eau (100) permettant de sceller de manière étanche à l'eau un tube soufflé (310) contenant une unité de fibres soufflées (305, 305') au niveau d'un point d'extraction de l'unité de fibres soufflées à partir du tube soufflé, comprenant :
- un corps monolithique d'un matériau déformable élastiquement ayant un trou (115, 120) le long d'une direction (X-X) ;
- ledit trou ayant une première ouverture au niveau d'une première extrémité libre (125) du corps monolithique et une seconde ouverture au niveau d'une seconde extrémité libre (133) du corps monolithique, la première ouverture étant une entrée pour le tube soufflé et la seconde ouverture étant une sortie pour l'unité de fibres soufflées extraite du tube soufflé ;
- dans lequel ledit trou comprend un premier trou (115) et un second trou (120) alignés le long de ladite direction, le premier trou ayant un premier diamètre (d1) approprié pour recevoir à l'intérieur une partie terminale du tube soufflé avec une interférence mécanique, et ledit second trou ayant un deuxième diamètre (d2) approprié pour recevoir à l'intérieur l'unité de fibres soufflées extraite avec une interférence mécanique, dans lequel le second trou est tronconique, avec un diamètre se réduisant le long de ladite direction (X-X) à partir de la première extrémité libre (125) vers la seconde extrémité libre (133),
**caractérisé en ce que** :
- ledit trou (115, 120) le long de ladite direction est un trou unique (115, 120), et
- le second trou (120) est évasé au niveau de son ouverture vers le premier trou (115).

2. Élément de blocage d'eau selon la revendication 1, dans lequel ledit second trou (120) comprend une première partie de trou (120-1) et une seconde partie de trou (120-2) alignées le long de ladite direction (X-X), la première partie de trou (120-1) étant plus proche de la première extrémité libre (125) et la seconde partie de trou (120-2) étant plus proche de la seconde extrémité libre (133), la première partie de trou (120-1) ayant un troisième diamètre (d3) plus grand que ledit deuxième diamètre (d2) et étant appropriée pour recevoir à l'intérieur avec une interférence mécanique une unité de fibres soufflées (305, 305') extraite avec un second nombre de fibres optiques plus grand que ledit premier nombre de fibres optiques.

3. Élément de blocage d'eau selon la revendication 2, dans lequel une partie du corps monolithique proche de la seconde extrémité libre (133) est formée dans lequel la seconde partie de trou (120-1) est prévue, et dans lequel ladite partie du corps monolithique proche de la seconde extrémité libre (133) est adaptée pour être séparée du reste du corps monolithique.

4. Élément de blocage d'eau selon l'une quelconque des revendications précédentes de la revendication 1 à la revendication 3, dans lequel le corps monolithique est constitué de caoutchouc.

5. Élément de blocage d'eau selon la revendication 4, dans lequel ledit caoutchouc est du caoutchouc TPE.

6. Élément de blocage d'eau selon l'une quelconque des revendications précédentes de la revendication 1 à la revendication 5, dans lequel le premier trou (115) est tronconique, avec un diamètre se réduisant le long de ladite direction (X-X) à partir de la première extrémité libre vers la seconde extrémité libre.
